# EUROPEAN PATENT APPLICATION

(11) **EP 1 265 174 A1**
(43) Date of publication of application: **11.12.2002**
(21) Application number: 02077300.8
(22) Date of filing: 07.06.2002
(51) Int. Cl.: G06F 17/60, B07C 5/34

(54) **Warehouse sorting machine**

(30) Priority: 07.06.2001 GB 0113882
(71) Applicant: Cleco Systems Limited, Market Harborough, Leicestershire LE16 7PZ (GB)
(72) Inventor: Quemby, Roger Alan, Manton, Rutland LE15 8SU (GB)
(74) Representative: Smith, Peter James

(57) **Abstract**

The invention provides a method of controlling a sorting machine comprising a conveyor (1) for moving items of warehouse stock past a group of transfer stations (3 to 6), and a divert mechanism at each transfer station (3 to 6) of the group for moving selected items laterally off the conveyor (1) onto transfer means (7 to 10) leading from that transfer station (3 to 6) to an associated collection station (11 to 14). Sorting of the stock-keeping units (SKUs) into combinations which have been ordered by a plurality of different stores is carried out as follows. A group of orders from the plurality of different stores is first analysed, and from that analysis there are identified SKUs which have been ordered in multiples and SKUs which have been ordered only singly, the divert mechanisms are controlled to move the SKUs which have been ordered only singly onto transfer means (7 to 10) leading from a minority of the transfer stations (3 to 6) of the group to a minority of the associated collection stations (11 to 14), and to move the SKUs which have been ordered in multiples onto transfer means (7 to 10) leading from the remainder of the transfer stations (3 to 6) of the group to the remainder of the associated collection stations (11 to 14).

## Description

### Field of the Invention

The invention relates to a method of controlling a sorting machine at a distribution warehouse, and to a sorting machine so controlled.

### Background Art

In a distribution warehouse in which goods are selected and dispatched to a number of destinations such as retail outlets, a sorting machine, sometimes called a sorter or a sortation machine, is used to select combinations of different goods for supplying to various destinations in response to individual orders from those various destinations. Typically the sorting machine comprises a conveyor for moving goods from a loading bay in a direction transverse to a number of transfer stations. As the goods pass the transfer stations, a divert mechanism of the sorter is actuated to divert selected items to individual selected collecting stations. The divert mechanism is computer controlled. The computer is supplied with information regarding the identity of the individual items of goods carried by the conveyor, for example by means of a bar code reader which reads a label on each item of goods and communicates that read code to the computer. The computer is also loaded with information regarding the orders received for shipment of different combinations of the goods. The divert mechanism of the sorting machine is then actuated by the computer to select items to make up each individual order and divert those items to the same collecting station.

A sorting machine may deliver different order selections to a number of collection stations simultaneously. An algorithm within the computer can prioritise the different orders, or can ensure that all orders obtain the same priority, as appropriate. For example if there are a number of identical orders, in the absence of a prioritising software algorithm the collection station nearest the loading bay would always fill first, in preference to all others, because the goods would pass that divert mechanism first. It is commonplace for sorting machines to incorporate software control algorithms which either ensure insofar as possible that all collection stations are filled at substantially the same rate or permit a selected one or more collection stations to fill in preference to the others.

Typically the above software algorithms would be designed so that if a consignment of ten identical stock items were placed together on the conveyor of the sorting machine at the loading station, those stock items would be distributed as evenly as possible between the collecting stations calling for them, unless one of those collecting stations had put in a 'priority order' request. This exacerbates the normal tendency for goods being delivered to the collection stations to arrive mixed up. The result is, inevitably, that as the goods are packed from a collecting station onto a roll cage, tote or pallet, identical items of merchandise for a single order will be separated from each other. Subsequently in the retail premises when the goods are offloaded the procedure of moving the products to their final destinations becomes longer and more tedious. Alternatively goods have to be repacked in a "store friendly" manner at the warehouse at considerable expense and effort.

It is an object of the invention to control the sorting machine and the actuation of the divert mechanisms at the transfer stations in a novel manner which increases product handling efficiency when packing goods from the collection stations and/or as the products are handled at their final destination.

### The Invention

The invention provides a method of controlling a sorting machine comprising a conveyor for moving items of warehouse stock past a group of transfer stations, and a divert mechanism at each transfer station of the group for moving selected items laterally off the conveyor onto transfer means leading from that transfer station to an associated collection station; wherein the sorting of stock-keeping units (SKUs) into combinations which have been ordered by a plurality of different stores is carried out as follows:
a group of orders from the plurality of different stores is first analysed, and from that analysis there are identified SKUs which have been ordered by the plurality of different stores in combination in multiples of at least a very small predetermined threshold number and SKUs which have been ordered by the plurality of different stores in combination only singly or in multiples below the predetermined threshold number;
the divert mechanism is controlled to move the SKUs which have been ordered only singly or in multiples below the predetermined threshold number onto transfer means leading from a minority of the transfer stations of the group to a minority of the associated collection stations, and to move the SKUs which have been ordered in multiples of at least the predetermined threshold number onto transfer means leading from the remainder of the transfer stations of the group to the remainder of the associated collection stations.

In the simplest case the predetermined threshold number of orders is two, so that only SKUs ordered as single items are below that threshold. For simplicity of presentation, the remainder of this description will refer to that simplest case, so that SKUs ordered in multiples of two or more will be identified simply as SKUs ordered in multiples, as opposed to single item SKUs.

The minority of the transfer stations from which the single item SKUs are diverted preferably comprise only one or at most two of the transfer stations of the group. There may be three, four or five other transfer stations in the group at which the SKUs which have been ordered in multiples are diverted to their associated collection stations. Preferably each of those collection stations allocated to SKUs ordered in multiples is assigned to receive only one SKU at a time, and fills with multiple items of that single SKU until the order allocation for that SKU is complete or until the collection station has been cleared completely and all its items transferred to transport vehicles assigned to individual stores from which the group of orders originated.

It has been estimated that for a typical group of orders from retail premises such as grocery supermarkets, the ratio of SKUs ordered in single item quantities to SKUs ordered in multiples decreases as a function of an increasing number of stores in the group placing the orders. For example, for a single store 35% of all SKUs ordered might be single item orders. For a group of two stores that 35% FIG will fall significantly, possibly to 20% or less. For a group of three stores the FIG will fall further, and it will fall further still for a group of four stores. If the number of stores in the group can be increased in number until only 10% or less of SKUs on average are ordered as single stock items, then the method of the invention enables very significant improvements to be achieved in warehouse and retail store handling efficiency, even though some degree of secondary sort is desirable at the collection stations.

At the collection stations, some degree of further product distribution will usually be necessary. This can be regarded as a secondary sort, and is preferably a manual sort as the SKUs are redistributed from the group of collection stations to individual transport vehicles assigned to individual stores from which the individual orders have originated. Conventional means, such as coloured light displays or message screen displays, can inform the warehouseman how the SKUs waiting at the various collection stations are to be distributed. The necessary information can be collected by a bar code reader for identifying individual SKUs at the minority of collection points associated with the SKUs ordered only singly.

### DRAWINGS

The invention is illustrated by reference to the drawings of which:
FIG 1 is a schematic view of a warehouse sorting machine comprising a single conveyor and a single group of collection stations, operating in accordance with the invention; and
FIG 2 is a similar schematic view of a warehouse sorting machine comprising either two conveyors or a loop conveyor with two adjacent parallel paths, discharging to two groups of collection stations and operating in accordance with the invention.

Let it be assumed that a group of four retail supermarkets identified as **W, X**, **Y** and **Z** have between them ordered goods identified as stock-keeping units (SKUs) **A** to **M.**

Some stores will have ordered only one item of certain SKUs but multiple items of other SKUs. Suppose the breakdown is as follows:

| **SKU** | Store **W** | Store **X** | Store **Y** | Store **Z** |
|---|---|---|---|---|
| **A** | 2 items | 2 items | 3 items | 5 items |
| **B** | 1 item | None | None | None |
| **C** | None | None | 1 item | 1 item |
| **D** | 1 item | None | None | 1 item |
| **E** | None | 1 item | None | None |
| **F** | 1 item | 1 item | None | 1 item |
| **G** | 1 item | 1 item | 1 item | None |
| **H** | 5 items | 3 items | 1 item | 1 item |
| **I** | None | None | 1 item | None |
| **J** | None | 1 item | None | None |
| **K** | 1 items | none | None | None |
| **L** | 6 items | 4 items | 5 items | 1 item |
| **M** | 1 item | 1 item | 1 item | 1 item |

An analysis of the total orders from the group of four stores is as follows:

| **SKU** | **Total Order** (Total No of items) |
|---|---|
| **A** | 12 |
| **B** | 1 |
| **C** | 2 |
| **D** | 2 |
| **E** | 1 |
| **F** | 3 |
| **G** | 3 |
| **H** | 10 |
| **I** | 1 |
| **J** | 1 |
| **K** | 1 |
| **L** | 16 |
| **M** | 4 |

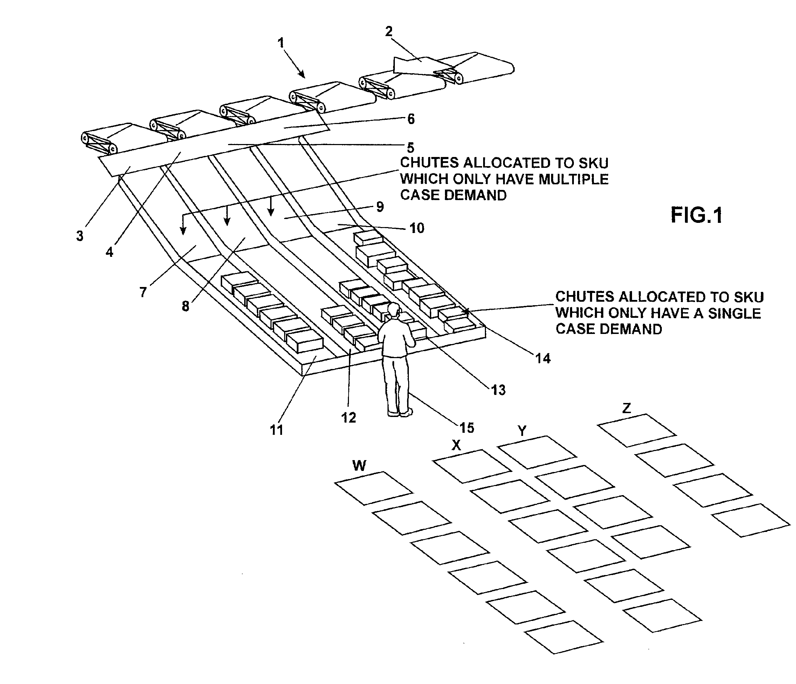

From this analysis it will be seen that SKUs **B, E, I, J** and **K** are demanded in only single item quantities, representing about 9% of the total number of items ordered. According to the invention, those SKUs are all assigned to the same collection station. That is illustrated in FIG 1 which shows a conveyor 1 of a sorting machine, moving in a direction shown by the arrow 2 past a group of four transfer stations 3, 4, 5 and 6. The conveyor 1 as illustrated is a series of separate cells each of which is itself a belt conveyor which can be actuated to discharge a load carried thereon laterally to the adjacent transfer station. That is one conventional construction of a sorter conveyor, and the software for actuating the transverse belts to discharge the loads at precisely the time when the relevant cells are moving past the designated transfer stations is the divert mechanism of this particular sorting machine. Entirely equivalent divert mechanisms of similar cellular conveyors could be bomb doors of the individual cells which open to drop the items vertically downwards at the designated transfer stations; or tilt trays at the individual conveyor cells, for tilting the cells to discharge the items carried by those cells as they pass designated transfer stations. Or the conveyor need not be of cellular construction at all, but could be a continuous conveyor on which a series of items is carried. The divert mechanism could then be a series of sliding shoes which are moved into the path of the goods being carried by the conveyor to push selected items by a cam action laterally from the conveyor path at a designated transfer station; or rams which extend to push the items in a similar fashion. The actual construction of the divert mechanism is immaterial to the invention.

When the goods leave the conveyor 1 at the designated transfer stations, they pass onto transfer means which are illustrated as chutes 7, 8, 9 and 10 leading to respective collection stations 11, 12, 13 and 14 where the goods are handled by an operator 15 who lifts them onto four rows of transfer carts which are labelled as **W, X, Y** and **Z** to correspond to the four stores from which the orders originate.

According to the invention the goods are sorted at the group of transfer stations 3, 4, 5 and 6 not according to the stores for which they are intended (which is the conventional sorting method) but according to whether they have been ordered in single quantities or in multiples. Thus SKUs **A C D F G H L** and **M** are diverted to the transfer stations 3, 4 and 5 but SKUs **B E I J** and **K** which have all been ordered in single item quantities only are diverted together to the transfer station 6. The divert sequence is as follows. Goods are loaded onto the conveyor 1 at a loading station (not shown) upstream of the group of transfer stations 3 to 6, in a sequence which is typically fairly random and depends on the design and operating practices of the warehouse. Suppose SKU **C** is placed on the conveyor first. The computer controlling the sorting machine assigns transfer station 3 to that SKU, and both items of SKU **C** are diverted to collection station 11. Suppose SKU **H** is the next to be loaded onto the conveyor. The total order for product **H** is for 10 items. But if the induct operator can carry only 8 items of SKU **H** to the conveyor at one time, then those 8 are assigned by the computer controlling the sorting machine to be diverted to collection station 12. No other product types are diverted to collection station 12 either until the remaining two items of SKU **H** are placed on the conveyor 1 and diverted to collection station 12, or until the collection station 12 has been cleared completely by the operator 15.

Thus a multiple quantity of a single SKU is always collected at each collection station 11 to 13 for a secondary sort by the operator 15, while the collection station 14 always receives a mixture of SKUs in single quantities. The operator 15 is directed as to where the various products at collection stations 11 to 14 are to be placed by a simple screen or display of coloured lights, and will move the assembled items from the collection stations to the transfer carts at **W X Y** and **Z** in accordance with the orders placed by the individual stores.

The increase in throughput and the total cost savings achievable by operating the sorting machine in accordance with the method of the invention are remarkable. Because the goods are actually loaded onto the transport carts for despatch by road to the individual stores in logically sorted multiples, the time spent subsequently at the warehouse or at the final destinations packing transfer carts in a logical manner for stacking on the shelves of the store is substantially shortened. Clearly the above illustration is simplistic in that it deals with only 13 SKUs. In a typical distribution warehouse dealing with the stocks of a supermarket chain there may be hundreds of SKUs and tens or several tens of stores. For such situations the sorting machine would have not four transfer stations but fifty or more. Preferably however they are grouped according to the invention into small groups of from four to eight transfer stations feeding an equivalent number of collection stations each group being served by one or more operators who load transfer carts for a small group of retail stores. Conventional algorithms can still be used for distributing the SKUs between the groups all along the conveyor line and ensuring that the group of transfer stations nearest the loading station do not receive preferential loading.

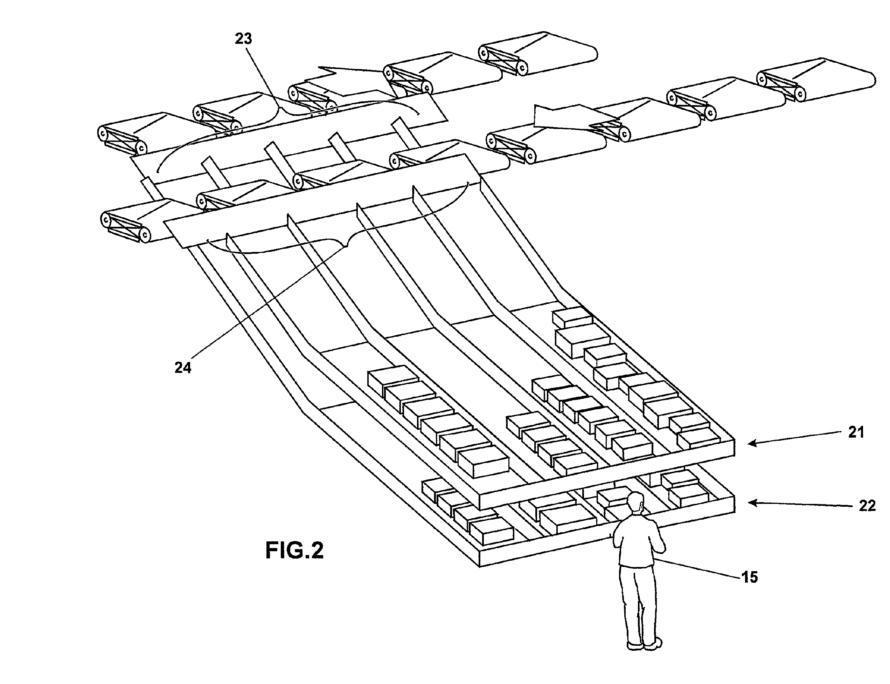

FIG 2 illustrates how in a variation of the sorting machine of FIG 1 the conveyor can be cyclic in route, with two adjacent parallel paths, discharging to two groups of collection stations 21 and 22. Typically such a conveyor would have more than one loading station, so that goods are loaded onto the conveyor upstream of the collection station 21 at a first loading station and other goods are loaded onto the conveyor upstream of the collection station 22. The ordered items are diverted at two groups of transfer stations 23 and 24 to collect together at the collection stations 21 and 22 which are adjacent so that the same operator 15 can transfer the assembled goods to the intended transfer carts (not shown) just as in FIG 1. In FIG 2 each group of transfer stations 23 and 24 includes one transfer station which is designated for receipt of SKUs ordered in single units only, with the others in the group receiving multiple quantity SKUs as described above.

A variation of the algorithm which controls the sorting machine in accordance with the invention could treat SKUs ordered in very small numbers from different stores in the group as single orders rather than as multiples. For example SKU **C** from the above tables could be treated as being two completely separate orders for single items of notionally different SKUs, and assigned to collection station 14 which is reserved for single item SKUs only. Minor tampering with the control algorithm will not make a substantial difference to the overall savings to be achieved using the method of the invention, but may be appropriate for particular products or for particular marketing patterns. It should therefore be understood that such minor modification does not in itself destroy the inventive concept and is included within the scope of the invention.

## Claims

1. A method of controlling a sorting machine comprising a conveyor (1) for moving items of warehouse stock past a group of transfer stations (3 to 6), and a divert mechanism at each transfer station of the group for moving selected items laterally off the conveyor (1) onto transfer means (7 to 10) leading from that transfer station to an associated collection station (11 to 14); wherein the sorting of stock-keeping units (SKUs) into combinations which have been ordered by a plurality of different stores is carried out as follows:
a group of orders from the plurality of different stores is first analysed, and from that analysis there are identified SKUs which have been ordered by the plurality of different stores in combination in multiples of at least a very small predetermined threshold number and SKUs which have been ordered by the plurality of different stores in combination only singly or in multiples below the predetermined threshold number;
the divert mechanisms are controlled to move the SKUs which have been ordered only singly or in multiples below the predetermined threshold number onto transfer means (7 to 10) leading from a minority of the transfer stations (3 to 6) of the group to a minority of the associated collection stations (11 to 14), and to move the SKUs which have been ordered in multiples of at least the predetermined threshold number onto transfer means (7 to 10) leading from the remainder of the transfer stations (3 to 6) of the group to the remainder of the associated collection stations (11 to 14).

2. A method according to claim 1, wherein the minority of the transfer stations (3 to 6) of the group consists of one transfer station only, so that all of the SKUs which have been ordered by the plurality of different stores in combination only as single items or in multiples below the predetermined threshold number are collected at a single collection station (11 to 14).

3. A method according to claim 2, wherein the divert mechanisms are controlled to move identical SKUs which have been ordered in multiples of at least the predetermined threshold number onto transfer means (7 to 10) leading from the same transfer stations (3 to 6) to the same associated collection stations (11 to 14).

4. A method according to any preceding claim, wherein the sorting machine comprises means for prompting a secondary sort of items in which SKUs are moved from the group of collection stations (11 to 14) to individual transport vehicles assigned to individual stores from which the group of orders originated.

5. A method according to claim 4, wherein the prompting means is a visual display at each collection station (11 to 14) identifying the transport vehicle for which the SKUs waiting at that collection station (11 to 14) have been ordered.

6. A method according to claim 5, wherein the visual display is a coloured light display.

7. A method according to claim 5, wherein the visual display is a message screen display.

8. A method according to any preceding claim, wherein the sorting machine comprises a bar code reader for identifying individual SKUs at the minority of collection stations (11 to 14) associated with the SKUs ordered only singly or in multiples below the predetermined threshold number.

9. A method according to any preceding claim, wherein the sorting machine comprises a plurality of groups of transfer stations (3 to 6) each group having an associated group of divert mechanisms and an associated group of collection stations (11 to 14), and the same sorting method is carried out at each of the said groups.

10. A method according to any preceding claim, wherein the predetermined threshold number is two.

11. A sorting machine controlled by a method according to any preceding claim.
